# EUROPEAN PATENT SPECIFICATION

(11) **EP 2 251 948 B1**
(45) Date of publication and mention of the grant of the patent: **24.10.2018**
(21) Application number: 10162484.9
(22) Date of filing: 11.05.2010
(51) Int. Cl.: H02G 3/08, H02G 3/12

(54) **Support structure for electrical or electronic devices of the type normally used in electrical installations**
Halterung für elektrische oder elektronische Bauteile in Elektroinstallationen
Elément de support pour des appareils électriques ou électroniques utilisés dans des installations électriques

(30) Priority: 15.05.2009 IT MC20090114
(43) Date of publication of application: 17.11.2010
(73) Proprietor: Lucaboni Stampi S.r.l., 60030 Castelbellino (AN) (IT)
(72) Inventor: Lucaboni, Maurizio, 60030 Maiolati Spontini (AN) (IT)
(74) Representative: Baldi, Claudio

(56) References cited:
- GB-A- 438 576
- US-A- 5 744 750
- US-A1- 2006 154 503
- US-A1- 2007 284 128
- US-A1- 2008 035 364

## Description

The present patent application for industrial invention relates to a support structure for electrical or electronic devices of the type normally used in electrical installations, such as control switches, electrical sockets, thermostats, emergency lamps, etc.

The structures used to house and support the aforementioned devices traditionally have a standardized construction according to which said devices are supported by a box-shaped frame without bottom wall that supports the electrical or electronic devices, which is fixed to a box drowned in the wall and inside which the wires of the chased electrical installation are brought.

Said box is normally made of plastic material and is provided with weakened areas along the walls (to make drilling easier) in order to break them down and pass the electrical wires that must be connected to the terminal blocks of said electrical or electronic devices, the body of which is practically enclosed inside said housing and protection box.

A mask with a series of holes is fixed on the front opening of said frame, said holes being covered with the electrical or electronic devices, which are supported by the support frame.

More precisely, said electrical devices must be inserted through the holes of the mask until their front side, which will remain visible, is practically flush to the mask.

As mentioned above, said electrical devices are supported by the support frame, which is provided with coupling means designed to cooperate with the coupling means provided on the back of each electrical device, when the latter is completely inserted into the corresponding hole on the mask.

More precisely, the front side of the devices is provided with control buttons or insertion holes for electrical plugs and is visible and accessible on the front of the mask.

For merely aesthetic reasons said box-shaped support frame is provided on the front opening with an external perimeter flange that acts as finish frame for the mask that closes the opening of said frame.

Said frame has an additional function, of mechanical type, since it acts as stop during mounting of the box-shaped frame on said wall-drowned box.

During said mounting the frame is screwed onto the box until the back of the frame touches the wall that defines the seat where the box is drowned.

The present invention has been devised within support structures of this type that, although available in the most diverse designs, are all provided with support mask and finish frame protruding from the surface of the installation wall.

The elements that remain visible, which determine the choice of the buyer in terms of design, are the frame, mask and front side of electrical or electronic devices.

These elements were originally made of plastics but, with the passing of time, designers have started to offer them in the most diverse materials.

The present invention has been devised to solve the problems that occur when steel is used as material for the visible elements.

When making a steel frame, especially with very low thickness, problems are encountered to provide stable fixing on the frame opening, which is currently obtained with glue.

The frame and a plate having the same shape as the plastic mask are cut with laser from a sheet of steel.

Then the steel finish frame is glued on the front border of the box-shaped plastic frame, whereas said steel finish plate is glued on the front side of the plastic mask.
Also the electrical devices can be frontally covered by gluing a steel finish plate with low thickness, so that all visible parts of the structure are covered with the same material.

It is evident that the drawbacks of such a solution consist in the time required to assemble the plastic components with the corresponding finish metal elements, and in the difficulties encountered to obtain precise assembly, which is in fact entrusted to specialized workers with the necessary level of experience and skill to ensure a satisfactory aesthetic result.

Further drawbacks occur during the installation of said support structures for electrical or electronic devices, because of the stress that may be originated when tightening the screws used to connect the frame to the box, which can unglue the frame from the opening of the support frame.

As mentioned above, said frame acts as stop against the wall, and therefore it cannot follow the adjustments of the support frame inside the box when the connection screws are tightened. The same type of drawbacks can be encountered when dismounting and replacing damaged or worn out components.

A further drawback consists in the high percentage of rejects during assembly, due to imprecise unacceptable centring of the metal finish plates with respect to the components on which the same are glued.

US2008/0035364 discloses a metal finish plate that is frontally applied on a plastic mask, by means of brackets that are fitted in corresponding seats of the plastic mask.

US2006/154503 discloses a finish element applied on a plastic mask by means of metal coating or rolling.

GB 438 576 discloses a cover plate for an electric wall switch comprising a main portion of mouldable material, such as synthetic resin, in which a metal plate 13 is embedded.

The purpose of the present invention is to remedy the aforementioned drawbacks by providing a new type of support structure for electrical and electronic devices.

A further purpose is to provide a support structure for electrical and electronic devices that allows for rapid, easy, non-traumatic replacement of said finish frame.

The new support structure for electrical and electronic devices is composed of a box-shaped plastic frame provided with steel finish frame, a plastic mask frontally covered with a thin metal plate and one or more electrical devices frontally covered with small metal finish plates; it being provided that the surface finish elements (frame, plate and small plates) are mechanically connected to the corresponding plastic support element.

More precisely, said metal finish elements are provided with protuberances that favor mechanical anchoring to the corresponding plastic support element, which is molded with a mould that allows for preloading the metal finish insert.

In this way, a finished product (support frame with frame or mask with plate or electrical or electronic device with small plate) can be obtained from molding, being composed of the plastic support with corresponding finish element, which is firmly anchored on the front of said support.

For major clarity the description of the invention continues with reference to the enclosed drawings, which are intended for purposes of illustration only and not in a limiting sense, wherein:
- figure 1 is an exploded axonometric view of the structure of the invention, in which each plastic element is shown separately from the corresponding metal finish element;
- figure 2 is an exploded axonometric view of the structure of the invention, in which each plastic element is covered with the corresponding metal finish element, which is anchored to it;

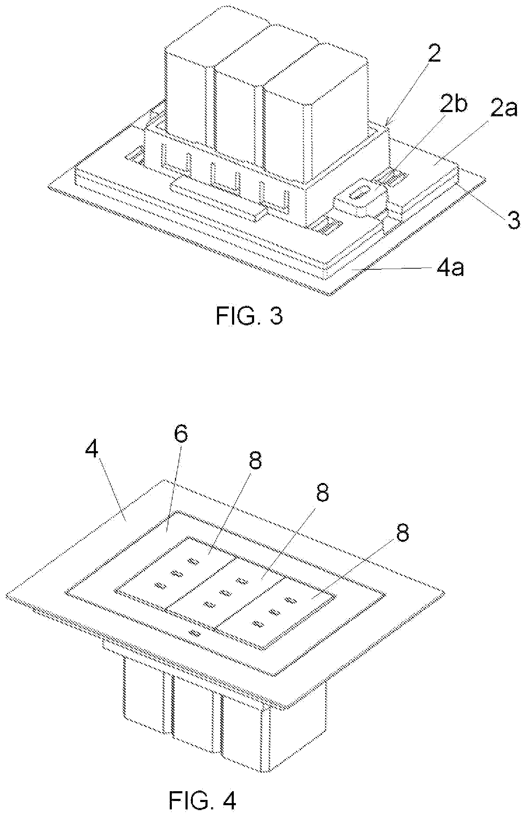

- figure 3 is an axonometric rear view of the structure of the invention in assembled condition;
- figure 4 is an axonometric front view of the structure of the invention in assembled condition;
- figure 5 is a front view of the structure of fig. 3 and 4, fixed to the wall;
- figure 6 is a cross-sectional view of the structure of fig. 5 with plane VI-VI;

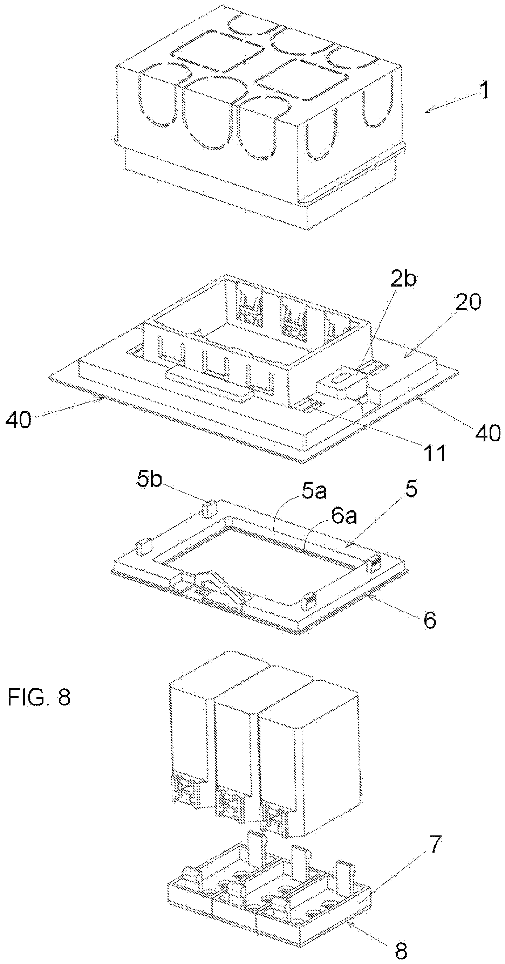

- figures 7 and 8 are identical to figs. 1 and 2, respectively, except for they show an alternative embodiment of the same structure, in which the frame that frontally covers the support frame is fixed directly to it.

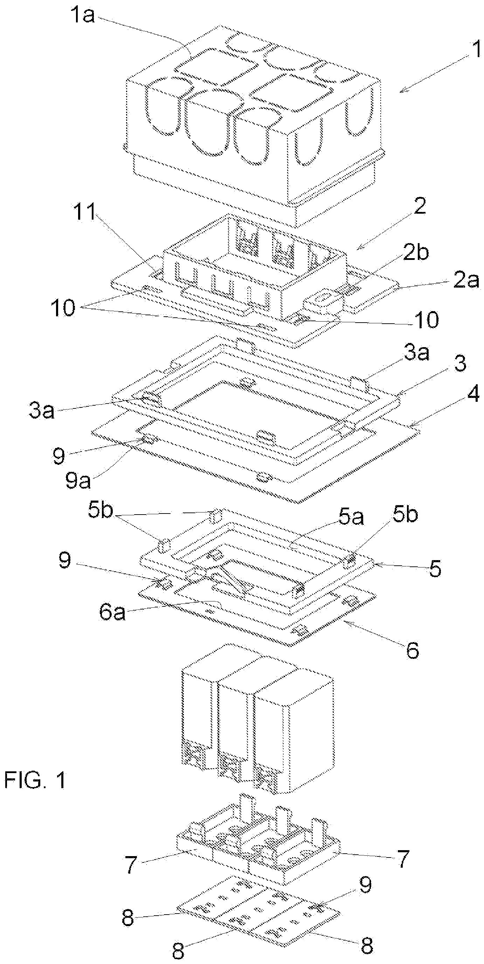

According to a preferred embodiment of the invention, which is shown in fig. 1, the structure of the invention comprises:
- a traditional box (1);
- a box-shaped plastic frame (2) provided with external flange (2a);
- a plastic support frame (3) frontally covered with a metal finish frame (4) which is co-molded with said support frame (3);
- a plastic mask (5) frontally covered with a corresponding metal finish plate (6), which is co-molded with said mask (5);
- a plastic electrical or electronic device (7) frontally covered with a corresponding small metal finish plate (8), which is co-molded with said device (7).

Moreover, it must be noted that said mask (5) and said plate (6) are both provided with an identical opening (5a, 6a) designed to house an electrical or electronic device (7). The frame (4), plate (6) and small plates (8) are preferably made of aluminum.

Referring to fig. 1, the frame (4), plate (6) and small plate (8) are provided on the back with a series of "Ω"-folded brackets (9) made of aluminum and welded with laser at two external wings (9a) of said brackets (9). In this way the plastics injected in the mould tends to penetrate also the "bulge" of said "Ω"-shaped brackets (9), which are completely drowned and inserted in said molding material.
The box (1) is provided on bottom and lateral edges with weakened areas (1a) that can be broken down, if necessary, to create holes to pass the electrical wires for connection of said devices.

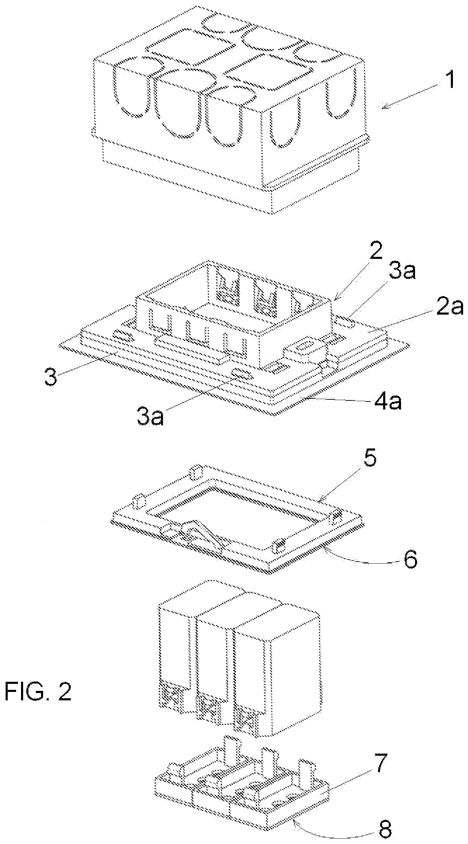

Referring to figs. 1 and 2, the external flange (2a) of the frame (2) is provided with first slots (10) near the perimeter, which are designed to provide snap-fitting with corresponding hooks (3a) that protrude on the back of the support frame (3). The same external flange (2a) of the frame (2) is provided with second slots (11) designed to provide snap-fitting with corresponding hooks (5b) that protrude on the back of the mask (5).

The same external flange (2a) of the frame (2) is provided with an opposite pair of collars (2b) that protrude from the back and are designed to receive the screws used to tighten the frame (2) to the box (1).

According to said first embodiment, the frame (4) can be easily replaced or dismounted from the support frame (2) by simply exerting sufficient traction to release the hooks (3a) from the slots (10).

Finally, it must be noted that the frame (4) is provided with an internal opening that is perfectly identical to the opening of the support frame (3), whereas the external border (4a) of said frame (4) protrudes with respect to said support frame (3).

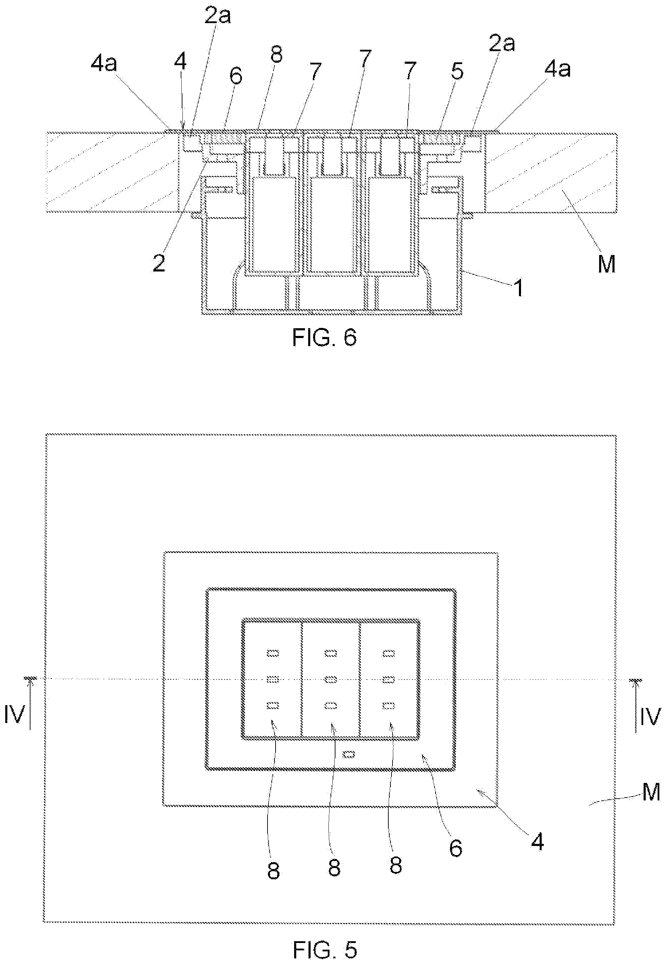

Referring to fig. 6, it must be noted that, when the structure of the invention is installed, the external border (4a) of the frame (4) is stopped against the wall, whereas the frame (3) is exactly recessed inside the seat obtained on the wall (M) to house the box (1).

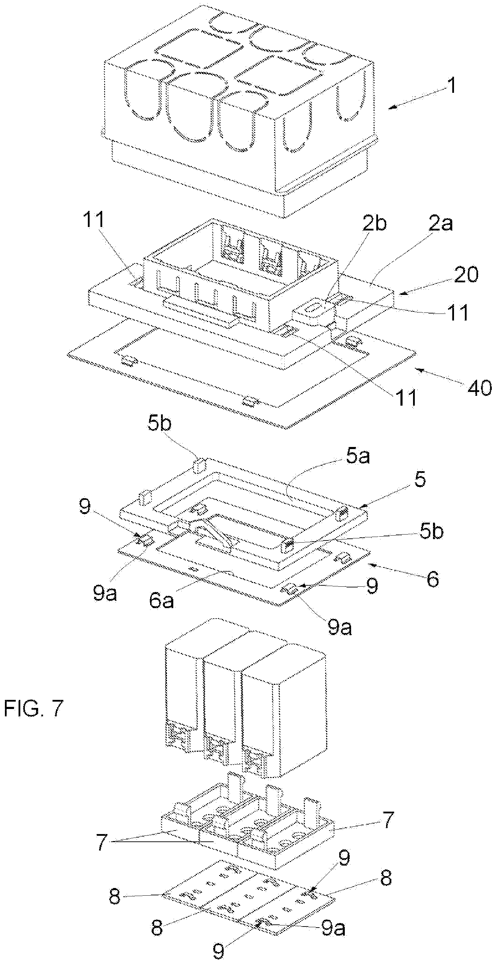

With reference to fig. 7, said support structure for electrical or electronic devices can be made according to an alternative embodiment, which differs from the one described above only in that the frame (40) is co-molded on the external side of said flange (20a) of the frame (20), which is therefore provided with a fixed metal frame (40).

## Claims

1. Support structure for electrical and electronic devices, of the type comprising:
- a plastic box (1);
- a box-shaped support frame (2; 20) made of plastic material and designed to be coupled with said box (1);
- a plastic mask (5) used to cover the front opening of the support frame (2; 20);
- at least one electrical or electronic device (7) made of plastic material, designed to be coupled with said support frame (2, 20);
at least one of said plastic support frame (2; 20), plastic mask (5) and plastic device (7) is frontally covered with a metal finish element (4; 40, 6, 8) provided on the back with a series of brackets (9),
structure **characterized in that**
at least one of said plastic support frame (2; 20), plastic mask (5) and plastic device (7) is co-molded with the corresponding metal finish element (4; 40, 6, 8), in such a way that said brackets (9) of the metal finish element (4; 40, 6, 8) are drowned in the plastic material.

2. Structure as claimed in claim 1, **characterized in that** said brackets (9) are "Ω"-folded brackets, in such a way to form two external wings (9a) that are welded to said metal finish element (4; 40, 6, 8).

3. Structure as claimed in claim 1 or 2, **characterized in that** said metal finish element (6) is a frame that frontally covers said mask (5), which is co-molded with said metal finish element (6).

4. Structure as claimed in any one of the above claims, **characterized in that** said metal finish element (8) is a plate that frontally covers the corresponding electrical or electronic device (7), which is co-molded with said metal finish element (8).

5. Structure as claimed in any one of the above claims, **characterized in that** said metal finish element (40) is a frame that frontally covers said support frame (20), which is co-molded with said metal finish element (40).

6. Structure as claimed in one or more of claims 1 to 4, **characterized in that** it comprises a second support frame (3) made of plastic material, which is designed to be mounted on said first box-shaped support frame (2) and said metal finish element (4) is a frame (4) that frontally covers said second support frame (3), which is co-molded with said metal finish element (4).

7. Structure as claimed in one or more of the above claims, **characterized in that** said box-shaped support frame (2; 20) has a flange (2a) provided with fitting means (11) that cooperate with corresponding snap-fitting means (5b) provided on the back of said mask (5).

8. Structure as claimed in claim 7, **characterized in that** said fitting means (11) of the box-shaped support frame consist in slots (11) and said snap-fitting means (5b) of the mask consist in hooks (5b).

9. Structure as claimed in one or more of claims 6 to 8, **characterized in that** said second support frame (3) is provided on the back with fitting means (3a) designed to cooperate with corresponding snap-fitting means (10) provided on the front of a flange (2a) of the first box-shaped support frame.

10. Structure as claimed in claim 9, **characterized in that** said fitting means (10) of the first box-shaped frame consist in slots (10) and said snap-fitting means (3a) of the second support frame consist in hooks (3a).

11. Structure as claimed in one or more of claims 7 to 10, **characterized in that** said external flange (2a) of the box-shaped frame (2; 20) is provided with an opposite pair of collars (2b) that protrude from the back and are designed to receive screws to tighten the box-shaped frame (2; 20) to the box (1).

## Patentansprüche

1. Haltestruktur für elektrische oder elektronische Geräte des Typs, der Folgendes umfasst:
- einen Kasten (1) aus Kunststoff;
- einen kastenförmigen Tragrahmen (2; 20) aus Kunststoff, der mit dem Kasten (1) verbindbar ist;
- eine Maske (5) aus Kunststoff, die geeignet ist, die vordere Öffnung des Tragrahmens (2; 20) zu bedecken;
- wenigstens eine elektrische oder elektronische Vorrichtung (7) aus Kunststoff, die geeignet ist, mit dem Tragrahmen (2, 20) verbunden zu werden;
wenigstens eines aus Tragrahmen aus Kunststoff (2; 20), Maske aus Kunststoff (5) und Vorrichtung aus Kunststoff (7) ist vorderseitig mit einem metallischen Verkleidungselement (4; 40, 6, 8) verkleidet, das auf der Rückseite eine Reihe von Halterungen (9) aufweist,
wobei die Struktur **dadurch gekennzeichnet ist, dass**
wenigstens eines aus Tragrahmen aus Kunststoff (2; 20), Maske aus Kunststoff (5) und Vorrichtung aus Kunststoff (7) mittels Co-Spritzgussverfahren zusammen mit dem entsprechenden metallischen Verkleidungselement (4; 40, 6, 8) hergestellt ist, derart, dass die Halterungen (9) des metallischen Verkleidungselements (4; 40, 6, 8) im Kunststoff versenkt sind.

2. Struktur nach Anspruch 1, **dadurch gekennzeichnet, dass** die Halterungen (9) "Ω"-förmig gebogen sind, derart, dass zwei äußere Flügel (9a) gebildet werden, die an dem metallischen Verkleidungselement (4; 40, 6, 8) angeschweißt sind.

3. Struktur nach Anspruch 1 oder 2, **dadurch gekennzeichnet, dass** das metallische Verkleidungselement (6) ein Rahmen ist, der die mittels Co-Spritzgussverfahren zusammen mit dem entsprechenden metallischen Verkleidungselement (6) hergestellte Maske (5) vorderseitig bedeckt.

4. Struktur nach einem der vorstehenden Ansprüche, **dadurch gekennzeichnet, dass** das metallische Verkleidungselement (8) eine Platte ist, die die mittels Co-Spritzgussverfahren zusammen mit dem metallischen Verkleidungselement (8) hergestellte, entsprechende elektrische oder elektronische Vorrichtung (7) vorderseitig bedeckt.

5. Struktur nach einem der vorstehenden Ansprüche, **dadurch gekennzeichnet, dass** das metallische Verkleidungselement (40) ein Rahmen ist, der den mittels Co-Spritzgussverfahren zusammen mit dem metallischen Verkleidungselement (40) hergestellten Tragrahmen (20) vorderseitig bedeckt.

6. Struktur nach einem oder mehreren der Ansprüche von 1 bis 4, **dadurch gekennzeichnet, dass** sie einen zweiten Tragrahmen (3) aus Kunststoff umfasst, der geeignet ist, auf dem ersten kastenförmigen Tragrahmen (2) befestigt zu werden, und dass das metallische Verkleidungselement (4) ein Rahmen (4) ist, der den zweiten, mittels Co-Spritzgussverfahren zusammen mit dem metallischen Verkleidungselement (4) hergestellten Tragrahmen (3) vorderseitig bedeckt.

7. Struktur nach einem oder mehreren der vorstehenden Ansprüche, **dadurch gekennzeichnet, dass** der kastenförmige Tragrahmen (2; 20) einen Flansch (2a) aufweist, auf dem Einsteckmittel (11) herausgearbeitet sind, die geeignet sind, mit entsprechenden Einrastmitteln (5b) zusammenzuwirken, die auf der Rückseite der Maske (5) herausgearbeitet sind.

8. Struktur nach Anspruch 7, **dadurch gekennzeichnet, dass** die Einsteckmittel (11) des kastenförmigen Tragrahmens aus Schlitzen (11) bestehen und die Einrastmittel (5b) der Maske aus Haken (5b) bestehen.

9. Struktur nach einem oder mehreren der Ansprüche 6 bis 8, **dadurch gekennzeichnet, dass** der Tragrahmen (3) auf der Rückseite Einsteckmittel (3a) aufweist, die geeignet sind, mit entsprechenden Einrastmitteln (10) zusammenzuwirken, die auf der Vorderseite eines Flansches (2a) des ersten kastenförmigen Tragrahmens angeordnet sind.

10. Struktur nach Anspruch 9, **dadurch gekennzeichnet, dass** die Einsteckmittel (10) des ersten kastenförmigen Rahmens aus Schlitzen (10) bestehen und die Einrastmittel (3a) des zweiten Tragrahmens aus Haken (3a) bestehen.

11. Struktur nach einem der Ansprüche 7 bis 10, **dadurch gekennzeichnet, dass** der äußere Flansch (2a) des kastenförmigen Rahmens (2; 20) ein gegenüberliegendes Paar von Bünden (2b) aufweist, die aus der Rückseite auskragen und dazu bestimmt sind, Schrauben zum Festziehen des kastenförmigen Rahmens (2; 20) an dem Kasten (1) aufzunehmen.

## Revendications

1. Structure de support pour dispositifs électriques ou électroniques du type comprenant :
- un boitier (1) en plastique ;
- un châssis de support de forme parallélépipédique (2; 20), en plastique, que l'on peut coupler au dit boitier (1) ;
- un gabarit (5), en plastique, apte à fermer l'embouchure frontale du châssis de support (2; 20) ;
- au moins un dispositif électrique ou électronique (7), en plastique, apte à être couplé au dit châssis de support (2, 20) ;
au moins l'un des dits châssis de support en plastique (2; 20), gabarit en plastique (5) et dispositif en plastique (7) est revêtu frontalement par un élément de finition en métal (4; 40, 6, 8) qui présente sur sa face arrière une série de brides (9),
structure **caractérisée en ce que**
au moins l'un des dits châssis de support en plastique (2; 20), gabarit en plastique (5) et dispositif en plastique (7) est co-moulé avec le correspondant élément de finition en métal (4; 40, 6, 8), de façon que lesdites brides (9) de l'élément de finition en métal (4; 40, 6 , 8) résultent noyées dans le plastique.

2. Structure selon la revendication 1, **caractérisée en ce que** lesdites brides (9) sont pliées en forme d'« Ω" de manière à former deux ailes externes (9a) qui sont soudées au dit élément de finition en métal (4; 40, 6, 8).

3. Structure selon la revendication 1 ou 2, **caractérisée en ce que** ledit élément de finition en métal (6) est un cadre qui revêt frontalement ledit gabarit (5) co-moulé avec ledit élément de finition en métal (6).

4. Structure selon l'une quelconque des revendications précédentes, **caractérisée en ce que** ledit élément de finition en métal (8) est une plaque qui revêt frontalement le correspondant dispositif électrique ou électronique (7) co-moulé avec ledit élément de finition en métal (8).

5. Structure selon l'une quelconque des revendications précédentes, **caractérisée en ce que** ledit élément de finition en métal (40) est un cadre qui revêt frontalement ledit châssis de support (20), co-moulé avec ledit élément de finition en métal (40).

6. Structure selon l'une ou plusieurs des revendications de 1 à 4, **caractérisée en ce qu'**elle comprend un second châssis de support en forme de cadre (3) en plastique, apte à être monté sur ledit premier châssis de support de forme parallélépipédique (2) et ledit élément de finition en métal (4) est un cadre (4) qui revêt frontalement ledit second châssis de support (3), co-moulé avec ledit élément de finition en métal (4).

7. Structure selon l'une quelconque des revendications précédentes, **caractérisée en ce que** ledit châssis de support de forme parallélépipédique (2; 20) présente une bride (2a) sur laquelle sont réalisés des moyens d'engagement (11) aptes à coopérer avec des correspondants moyens d'accrochage à enclenchement (5b) disposés sur la face arrière du dit gabarit (5).

8. Structure selon la revendication 7, **caractérisée en ce que** lesdits moyens d'engagement (11) du châssis de support de forme parallélépipédique consistent dans des fentes (11) et que lesdits moyens d'accrochage à enclenchement (5b) du gabarit consistent dans des crochets correspondants (5b).

9. Structure selon l'une ou plusieurs des revendications de 6 à 8, **caractérisée en ce que** ledit second châssis de support en forme de cadre (3) présente sur sa face arrière des moyens d'engagement (3a) aptes à coopérer avec des correspondants moyens d'accrochage à enclenchement (10) disposés sur la face avant d'une bride (2a) du premier châssis de support de forme parallélépipédique.

10. Structure selon la revendication 9, **caractérisée en ce que** lesdits moyens d'engagement (10) du premier châssis de forme parallélépipédique consistent dans des fentes (10) et que lesdits moyens d'accrochage à enclenchement (3a) du second châssis en forme de cadre consistent dans des crochets correspondants (3a).

11. Structure selon l'une ou plusieurs des revendications de 7 à 10, **caractérisée en ce que** ladite bride externe (2a) du châssis de forme parallélépipédique (2; 20) présente une paire opposée de colliers (2b) faisant saillie de sa face arrière et destinés à loger les vis de serrage du châssis de forme parallélépipédique (2; 20) au boitier (1).
